# EUROPÄISCHE PATENTANMELDUNG

(11) **EP 1 876 436 A1**
(43) Veröffentlichungstag der Anmeldung: **09.01.2008**
(21) Anmeldenummer: 06116840.7
(22) Anmeldetag: 07.07.2006
(51) Int. Cl.: G01N 5/04

(54) **Messgerät zur gravimetrischen Feuchtigkeitsbestimmung**

(71) Anmelder: Mettler-Toledo AG, 8606 Greifensee (CH)
(72) Erfinder: Lüchinger, Paul, 8610, Uster (CH)

(57) **Zusammenfassung**

Das erfindungsgemässe Messgerät zur gravimetrischen Feuchtigkeitsbestimmung weist mindestens eine Strahler, eine Wägezelle und eine mit der Wägezelle verbindbare Probeaufnahme auf. Auf die Probeaufnahme ist eine Probe auflegbar beziehungsweise entfernbar. Die mindestens eine Strahler weist eine gegen die Probe gerichtete, im Wesentlichen die gesamte Oberfläche der Probe mit gleichmässiger Strahlungsintensität beaufschlagende Abstrahlungsfläche auf, ist bezogen auf die Lastrichtung oberhalb der Probe angeordnet und überspannt die Probe. Im Messgerät ist eine Entfernungsvorrichtung vorhanden, welche der Entfernung des im Betrieb zwischen der Probe und der Abstrahlungsfläche mit Feuchtigkeit angereicherten gasförmigen Mediums dient.

## Beschreibung

Die vorliegende Erfindung bezieht sich auf ein Messgerät zur gravimetrischen Feuchtigkeitsbestimmung.

Zur Bestimmung des Feuchtigkeitsgehaltes einer Probe wird diese getrocknet und das Gewicht vor und nach dem Trocknungsvorgang manuell bestimmt. Durch die umfangreichen Arbeitsabläufe, die mit dieser Methode verbunden sind, ist diese sehr teuer und anfällig für Fehler.

Gegebenenfalls kann der Gewichtsverlust auch während des Trocknungsvorganges gemessen werden. Dabei nimmt bei einer bekannten Probe in Abhängigkeit der Temperatur, der Trocknungszeit und der Prüfraumbedingungen deren Gewichtswert ab, welcher einer Gewichtsverlust-Trocknungszeitkurve folgt, die sich asymptotisch dem Trockengewicht der Probe annähert. Die Kurve wird für die jeweilige Probe durch Vergleichsversuche ermittelt und kann in einer Näherungsformel mathematisch ausgedrückt werden. Aufgrund der zur Verfügung stehenden elektronischen Mittel kann ein entsprechend ausgerüstetes Messgerät zur gravimetrischen Feuchtigkeitsbestimmung den Feuchtigkeitsgehalt einer Probe anhand der gemessen Kurvenparameter und der Trocknungszeit errechnen und auf einer Anzeigeeinheit anzeigen. Durch diese Methode muss das zu trocknende Gut nicht mehr vollständig durchgetrocknet sein, es genügt die Ermittlung der Koordinaten zweier Erfassungspunkte im Gewicht-Zeitdiagramm.

Wie bereits eingangs erwähnt, verändert sich das Gewicht einer Probe im Wesentlichen in Abhängigkeit von der Temperatur, der Trocknungszeit und den Prüfraumbedingungen. Vor allem die hohen Anforderungen an den Prüfraum und seine Ausgestaltung beschränken die auf dem Markt erhältlichen Geräte in ihrer Genauigkeit.

Als Prüfraum wird ein durch das Gehäuse des Messgerätes umschlossener, zwecks Einführung beziehungsweise Entfernung einer Probe öffnenbarer Raum bezeichnet. Im Inneren des Prüfraums sind zudem eine Probeaufnahme und ein Mittel zur Erwärmung der Probe angeordnet. Die Probeaufnahme ist mit einem gravimetrischen Messgerät verbunden.

Üblicherweise wird eine dünne Schicht der Probe auf eine ebene Probeaufnahme, beispielsweise eine Probeschale aufgebracht. Die Schale wird im Messgerät zur gravimetrischen Feuchtigkeitsbestimmung in ihrer flächigen Ausdehnung vorzugsweise horizontal angeordnet, um bei Proben geringer Viskosität zu vermeiden, dass sich die Probe bezogen auf die Lastrichtung am tiefsten Punkt der Probeschale sammelt.

Als Mittel zur Erwärmung der Probe werden verschiedene Strahler wie Heizstrahler, Mikrowellengeneratoren, Halogen- und Quarzlampen verwendet. Ein Messgerät zur gravimetrischen Feuchtigkeitsbestimmung der genannten Gattung ist aus der europäischen Patentschrift EP 0 611 956 B1 bekannt. Bei diesem Gerät erfolgt die Beschickung der Waagschale ausserhalb des Messgerätes zur gravimetrischen Feuchtigkeitsbestimmung. Dazu wird die Waage auf einem schubladenförmigen Auszug aus dem Messgerätgehäuse herausgefahren. Als Strahler wird eine ringförmige Halogenlampe eingesetzt, welche im Betriebszustand oberhalb der Probeaufnahme angeordnet ist.

Durch Versuche konnte festgestellt werden, dass eine der Hauptursachen einer ungenauen Messwerterfassung bei bestehenden Messgeräten zur gravimetrischen Feuchtigkeitsbestimmung die Art der verwendeten Strahler und deren Ausgestaltung ist. So können Strahler mit Durchbrüchen oder Strahler, deren Strahlung im Wesentlichen von einem Punkt oder einer Linie ausgeht, zu einer ungleichmässigen Bestrahlung der Probe führen, wodurch an einzelnen Stellen der Probe die Energiedichte so hoch sein kann, dass sich die Probe stellenweise thermisch zersetzt.

Sofern der Strahler eine flächige, die Probe überspannende und weitgehend ebene Ausgestaltung aufweist, kann sich zwischen der Probe und dem Strahler ein lokal verharrendes und mit Feuchtigkeit gesättigtes Gaspolster bilden und den weiteren Austritt der Feuchtigkeit aus der Probe verhindern. Eine solche Hemmung des Trocknungsvorgangs könnte die Trocknungszeit erheblich beeinflussen, wobei insbesondere die durch Temperatureinflüsse zufälligen Strömungsverhältnisse zwischen der Strahler und der Probe ins Messergebnis einfliessen.

Die durch Hemmung des Trocknungsvorgangs verursachten Trocknungszeit- Fehler und/oder die durch thermische Zersetzung entstehenden Messfehler in den Probengewichtswerten limitieren die Genauigkeit bei einer Auswertung durch das oben beschriebene Rechenmodell. Alternativ zur Verwendung des Rechenmodells kann das bekannte Verfahren angewendet werden, bei dem möglichst die gesamte Feuchtigkeit ausgetrieben werden muss. Dies erfordert aber eine sehr lange Trocknungszeit, womit das Risiko grösser wird, dass eine thermische Zersetzung oder Oxidation der Probe durch die lange anhaltende Beaufschlagung mit der Wärmestrahlung der Strahler erfolgt.

Aus den vorangehend erläuterten Gründen ist eine Absolutwertbestimmung des Feuchtigkeitsgehaltes mit einem Messgerät zur gravimetrischen Feuchtigkeitsbestimmung kaum möglich. Demzufolge wird für die genauere Bestimmung der Feuchtigkeit eines Stoffes oder für die Eichung von Trocknern immer noch das Karl-Fischer-Titrationsverfahren angewendet. Dieses Verfahren ist sehr arbeitsintensiv, anfällig auf Anwenderfehler und teuer.

Aufgabe der vorliegenden Erfindung ist es daher, ein Messgerät zur gravimetrischen Feuchtigkeitsbestimmung mit einem Strahler zu schaffen, welcher eine verbesserte Strahlungsverteilung über die Probe aufweist. Ferner sollte infolge der verbesserten Strahlungsverteilung das Austrittsverhalten der Feuchtigkeit aus der Probe nicht beeinträchtigt werden.

Diese Aufgabe wird erfindungsgemäss mit einem Messgerät zur gravimetrischen Feuchtigkeitsbestimmung gemäss dem Anspruch 1 gelöst.

Das erfindungsgemässe Messgerät zur gravimetrischen Feuchtigkeitsbestimmung weist mindestens einen Strahler, eine Wägezelle und eine mit der Wägezelle verbindbare Probeaufnahme auf. Auf die Probeaufnahme ist eine Probe auflegbar beziehungsweise von dieser entfernbar. Der mindestens eine Strahler weist eine gegen die Probe gerichtete, im Wesentlichen die gesamte Oberfläche der Probe mit gleichmässiger Strahlungsintensität beaufschlagende Abstrahlungsfläche auf, ist bezogen auf die Lastrichtung oberhalb der Probe angeordnet und überspannt die Probe. Im Messgerät ist eine Entfernungsvorrichtung vorhanden, welche der Entfernung des im Betrieb zwischen der Probe und der Abstrahlungsfläche mit Feuchtigkeit angereicherten gasförmigen Mediums dient.

Diese Entfernungsvorrichtung kann sehr verschieden ausgestaltet sein.

In einer ersten Ausgestaltung des erfindungsgemässen Messgeräts ist zumindest die Abstrahlungsfläche des mindestens einen Strahlers relativ zur Probe drehbar angeordnet. Wenn im Betrieb des Messgerätes unter der Einwirkung der Strahlung, insbesondere von Wärmestrahlung, die Feuchtigkeit aus der Probe ausgetrieben wird, kann sich zwischen der Abstrahlungsfläche und der Probe ein mit Feuchtigkeit gesättigtes Gaspolster bilden. Durch die in Drehung versetzte Abstrahlungsfläche des Strahlers werden in unmittelbarer Nähe der Abstrahlungsfläche Teile des Gaspolsters mitgerissen und durch die Zentrifugalkraft an den Randbereich der Abstrahlungsfläche befördert. Dort kann das an den Randbereich beförderte, mit Feuchtigkeit angereicherte, gasförmige Medium durch die Strömung beispielsweise einer Absaugvorrichtung erfasst und abgeführt werden. Oder das erwärmte, gasförmige Medium wird im Randbereich von kaltem und dadurch schwerem, gasförmigem Medium aus der unmittelbaren Umgebung Probeaufnahme verdrängt. Das warme gasförmige Medium steigt dadurch im Prüfraum nach oben und verlässt diesen, wie im Stand der Technik bekannt, über Lüftungsschlitze.

Somit dient eine drehbar gelagerte Abstrahlungsfläche als Entfernungsvorrichtung, sobald sie in Drehung versetzt worden ist. Selbstverständlich kann auch der ganze Strahler drehbar gelagert und damit in Drehung versetzbar sein. Als Antriebe können aktive wie passive Systeme verwendet werden. Unter aktiven Systemen ist beispielsweise ein Elektromotor zu verstehen, unter passiven Systemen beispielsweise ein Turbinenrad, welches durch das im Prüfraum nach oben steigende warme gasförmige Medium, beispielsweise Luft, angetrieben wird.

Wie vorangehend erläutert, reisst die sich drehende Abstrahlungsfläche Teile des Gaspolsters mit. Je grösser die Oberflächenrauhigkeit der drehbaren Abstrahlungsfläche ist, desto mehr des gasförmigen Mediums wird bei gleicher Drehzahl derselben in den Randbereich befördert. Vorzugsweise weist deshalb die Abstrahlungsfläche mindestens einen Oberflächenrauheitswert auf, der grösser oder gleich 0.0001 mm ist. Mit zunehmender Rauhigkeit kann aber die Gleichmässigkeit der Strahlungsverteilung über die Abstrahlungsfläche abnehmen. Da sich die Abstrahlungsfläche aber relativ zur Oberfläche der Probe dreht, wird zusätzlich das Ziel einer gleichmässigen Strahlungsverteilung unterstützt. Ferner muss die Oberflächenrauhigkeit auch dem Abstand der Probe zum Strahler angepasst sein. Je kleiner dieser Abstand ist, desto kleiner wird vorzugsweise die Oberflächenrauhigkeit gewählt, da durch die rotierende Abstrahlungsfläche Turbulenzen erzeugt werden, die bei zu starker Ausprägung das Messresultat negativ beeinflussen können. Zudem ist die Drehzahl der rotierenden Abstrahlungsfläche von der Strahlungsintensität beziehungsweise von der Temperatur abhängig, da das Austrittsverhalten der Feuchtigkeit aus der Probe in der Regel direkt von diesen Grössen abhängig ist.

Durch den Verteilungseffekt infolge der Rotation kann die Abstrahlungsfläche auch mindestens eine Rippe, Rille, Vertiefung oder Nut aufweisen, ohne dadurch die Strahlungsverteilung massiv zu beeinträchtigen. Dabei sind in der Ausgestaltung dieser Rippen, Rillen, Vertiefungen oder Nuten und deren Anzahl auf der Abstrahlungsfläche kaum Grenzen gesetzt.

Vorzugsweise entsprechen aber die an der Abstrahlungsfläche ausgebildeten, erhabenen Flächen der Rippen in ihrer Flächenform und ihrem Flächeninhalt den Flächen der zwischen den Rippen ausgebildeten Vertiefungen, um dadurch die Strahlungsverteilung zwischen dem Rotationsmittelpunkt und dem Rand der Abstrahlungsfläche nicht zu beeinträchtigen.

In einer zweiten Ausgestaltung des Messgerätes ist mindestens ein statischer Verdrängungskörper aus strahlendurchlässigem Material zwischen der Probe und dem Strahler angeordnet und dient als Entfernungsvorrichtung. Dabei wird der Effekt ausgenutzt, dass das erhitzte gasförmige Medium durch nachrückendes kaltes und schweres gasförmiges Medium aus dem Bereich zwischen der Abstrahlungsfläche und der Probe gegen die Abstrahlungsfläche hin verdrängt wird. Die Forderung nach möglichst gleichmässiger Strahlungsverteilung bei geringen Kosten schränkt die Gestaltungsmöglichkeiten der Abstrahlungsfläche wie nachstehend beschrieben ist, stark ein. Am einfachsten realisierbar ist ein Strahler mit einer ebenen, parallel zur Probe angeordneten Abstrahlungsfläche. Dies führt jedoch dazu, dass das mit Feuchtigkeit gesättigte gasförmige Medium zwischen der Probe und der Abstrahlungsfläche verharrt. Durch den statischen Verdrängungskörper wird eine Entfernung der mit Feuchtigkeit angereicherten Gase erst ermöglicht, da das erhitzte gasförmige Medium durch die Form des statischen Verdrängungskörpers in den Randbereich der Abstrahlungsfläche abgeleitet wird. Hierbei ist darauf hinzuweisen, dass die rein thermisch verursachten Strömungseffekte, wie sie zwangsläufig zwischen der Abstrahlungsfläche und der Probe entstehen, noch nicht eine im Sinne der Erfindung verstandene Entfernungsvorrichtung sind. Erst in Verbindung mit dem statischen Verdrängungskörper stellen die thermisch verursachten Strömungseffekte eine erfindungsgemässe Entfernungsvorrichtung dar.

Damit die durch das gasförmige Medium aufgenommene Feuchtigkeit an der Oberfläche des statischen Verdrängungskörpers nicht auskondensiert, verfügt der statische Verdrängungskörper idealerweise über teilabsorbierende Mittel, welche einen geringen Teil der Strahlung in Wärme umsetzen und so den statischen Verdrängungskörper selbst, oder dessen gegen die Probe gerichtete Oberfläche erwärmen. Solche teilabsorbierende Mittel können beispielsweise eine mit Metall bedampfte Oberfläche, metallische Füllstoffe im Verdrängungskörpermaterial, metallische Einlagen, Folien, Gewebe und dergleichen sein.

Je nach Ausgestaltung kann der mindestens eine statische Verdrängungskörper mit der Abstrahlungsfläche oder mit einem Gehäuseteil des Messinstrumentes verbunden sein.

Bezüglich der Formgebung des statischen Verdrängungskörpers sind kaum Grenzen gesetzt, da dieser aufgrund seiner Strahlendurchlässigkeit auf die Strahlungsverteilung an der Oberfläche der Probe kaum einen Einfluss hat. Idealerweise wird als statischer Verdrängungskörper eine kegelförmige oder halbkugelförmige Haube oder eine gekrümmte Platte verwendet. Bei der Ausgestaltung des statischen Verdrängungskörpers muss lediglich darauf geachtet werden, dass das erwärmte gasförmige Medium nicht gefangen wird. Bei Verwendung einer ebenen Platte muss diese beispielsweise unter einen Winkel α bezogen auf die Lastrichtung angeordnet sein, so dass das erwärmte gasförmige Medium beim Aufsteigen mindestens nach einer Seite hin abgeleitet wird, wobei der Winkel α zwischen 0°< α < 90° betragen sollte.

In einer dritten Ausgestaltung des Messgerätes können die Abstrahlungsfläche und gegebenenfalls der statische Verdrängungskörper eine zentrale Lagerstelle aufweisen. Durch diese Lagerstelle kann um eine Achse parallel zur Lastrichtung drehbar oder schwenkbar gelagert, eine Welle durchgeführt sein, wobei am zur Probe hin gerichteten Wellenende mindestens ein dynamischer Verdrängungskörper mit diesem Wellenende verbunden ist. Je kleiner die Bohrungs- und Wellenquerschnitte bezüglich der flächigen Ausdehnung der Abstrahlungsfläche sind, desto geringer ist deren Störeinfluss auf die Strahlungsverteilung. Idealerweise sendet die Welle selbst Strahlung aus. Vorzugsweise sind deren Emissionen auf den Abstand der Welle und den Abstand der Abstrahlungsfläche zur Probe abgestimmt.

Auch der dynamische Verdrängungskörper kann verschiedenste Ausgestaltungen aufweisen. Beispielsweise ist eine Art Wischerblatt denkbar, welches knapp über die Abstrahlungsoberfläche hinweg streicht. Ferner können mehrere, sternförmig angeordnete Wischerblätter am Wellenende angeordnet sein. Die Wischerblätter können zudem ähnlich der Beschaufelung eines Turbinen- oder Pumpenrades in Bezug auf die Achse der Welle radial und/oder axial gekrümmt sein.

Um die Förderleistung der Entfernungsvorrichtung zu verbessern, kann die Abstrahlungsfläche gegenüber der Welle mit dem mindestens einen dynamischen Verdrängungskörper einen gegenläufigen Drehsinn aufweisen. Dadurch kann die Drehzahl der Abstrahlungsoberfläche und der Welle relativ zur Probe gering gehalten werden, was sich sehr positiv auf die Unterdrückung zu grosser Turbulenzen im Raum zwischen der Probe und dem Strahler auswirken kann.

Der dynamische Verdrängungskörper kann aber auch als kegelförmige oder kugelförmige Haube ausgebildet sein und die gesamte Abstrahlungsfläche überspannen, wobei dieser analog dem statischen Verdrängungskörper aus strahlungsdurchlässigem Material sein muss.

Wie bereits vorangehend beim statischen Verdrängungskörper beschrieben, kann der dynamische Verdrängungskörper zumindest teilweise mit einem teilabsorbierenden Mittel versehen sein und/oder mindestens eine Rippe, Rille, Nut oder Vertiefung aufweisen.

Die Kombination der vorangehend beschriebenen Ausführungen ist ebenfalls möglich. Beispielsweise kann erfindungsgemäss als Entfernungsvorrichtung dienend, zumindest die Abstrahlungsfläche des mindestens einen Strahlers relativ zur Probe drehbar angeordnet sein, mindestens ein erster dynamischer Verdrängungskörper mit der Abstrahlungsfläche verbunden sein, sowie die Abstrahlungsfläche und gegebenenfalls der erste dynamische Verdrängungskörper eine zentrale Lagerstelle aufweisen. Durch diese Lagerstelle, um eine Achse parallel zur Lastrichtung drehbar oder schwenkbar gelagert, kann eine Welle durchgeführt sein, wobei am zur Probe hin gerichteten Wellenende mindestens ein zweiter dynamischer Verdrängungskörper mit diesem Wellenende verbunden ist und der erste dynamische Verdrängungskörper gegenüber dem zweiten dynamischen Verdrängungskörper einen gegenläufigen Drehsinn aufweist.

Um über die gesamte Probe möglichst eine gleichmässige Strahlungsverteilung zu erreichen, weist vorzugsweise in einer Ebene orthogonal zur Lastrichtung die Abstrahlungsfläche im Wesentlichen dieselbe Projektionsfläche auf wie die Probe.

Dies kann auf einfache Weise insbesondere dann erreicht werden, wenn die Abstrahlungsfläche im Wesentlichen parallel zur Oberfläche der Probe angeordnet, eben und planar ausgebildet ist, wobei der Strahler selbst über die gesamte Abstrahlungsfläche eine gleichmässige Strahlungsintensität aufweist.

Diese Anforderungen erfüllen beispielsweise Heizplatten und auf ebene Metallkörper aufgezogene Heizfolien ausgezeichnet. Durch ihre Metallstruktur werden ungleiche lokale Erwärmungen innerhalb des Metallkörpers ausgeglichen, so dass über die gesamte Abstrahlungsfläche mit gleichmässiger Strahlungsintensität die Wärmestrahlung emittiert wird.

Vorzugsweise deckt der statische oder dynamische Verdrängungskörper die gesamte Abstrahlungsfläche ab, so dass diese vor Verschmutzung geschützt ist.

Idealerweise ist der statische Verdrängungskörper über lösbare Befestigungselemente mit der Strahlungsquelle oder mit dem Gehäuse verbunden, so dass dieser zwecks Reinigung as dem Prüfraum ausgebaut beziehungsweise wieder eingebaut werden kann.

Zweckmässigerweise ist auch der mindestens eine dynamische Verdrängungskörper und/oder die Abstrahlungsfläche über lösbare Befestigungselemente mit der Welle verbunden.

Einzelheiten der erfindungsgemässen Messvorrichtung ergeben sich anhand der Beschreibung der in den Zeichnungen dargestellten Ausführungsbeispiele. Es zeigen:
- Fig. 1: die Darstellung einer Messvorrichtung im Schnitt mit einem Gehäuse, in welchem der Prüfraum und die Wägezelle nebeneinander angeordnet sind und einem den Strahler tragenden Deckel, welcher um eine im Wesentlichen horizontale Schwenkachse am Gehäuse schwenkbar gelagert ist, sowie eine im Deckel integrierte Absaugvorrichtung und einem isolierenden Belüftungskanal welcher zwischen der Wägezelle und dem Prüfraum angeordnet ist;
- Fig. 2a: die gegenüber Figur 1 vergrössert dargestellte Abstrahlungsfläche im Schnitt, jedoch mit Rippen versehen;
- Fig. 2b: die Abstrahlungsfläche aus Figur 2a in Aufsicht gemäss der in Figur 2a eingezeichneten Blickrichtung X mit einer ersten Ausgestaltung der Rippen;
- Fig. 2c: die Abstrahlungsfläche aus Figur 2a in Aufsicht gemäss der in Figur 2a eingezeichneten Blickrichtung X mit einer zweiten Ausgestaltung der Rippen;
- Fig. 3: eine drehbar gelagerter Strahler im Schnitt mit einer zentralen Bohrung, durch welche eine Welle geführt ist, an deren Wellenende ein dynamischer Verdrängungskörper angeordnet ist;
- Fig. 4: einen gehäusefest verbundenen Strahler im Schnitt mit zentraler Bohrung, durch welchen eine Welle geführt ist, an deren Wellenende ein dynamischer Verdrängungskörper aus strahlendurchlässigem Material angeordnet ist;
- Fig. 5: ein gehäusefest verbundener Strahler im Schnitt über dessen Abstrahlungsfläche ein kegelförmiger, statischer Verdrängungskörper aus strahlendurchlässigem Material angeordnet und mit dem Strahler fest verbunden ist, wobei der Verdrängungskörper an der Innenseite eine teilabsorbierende Schicht aufweist;
- Fig. 6: eine drehbar gelagerter Strahler im Schnitt mit einem ersten Verdrängungskörper und mit einer zentralen Bohrung, durch welche eine Welle geführt ist und an deren Wellenende ein zweiter dynamischer Verdrängungskörper angeordnet ist.

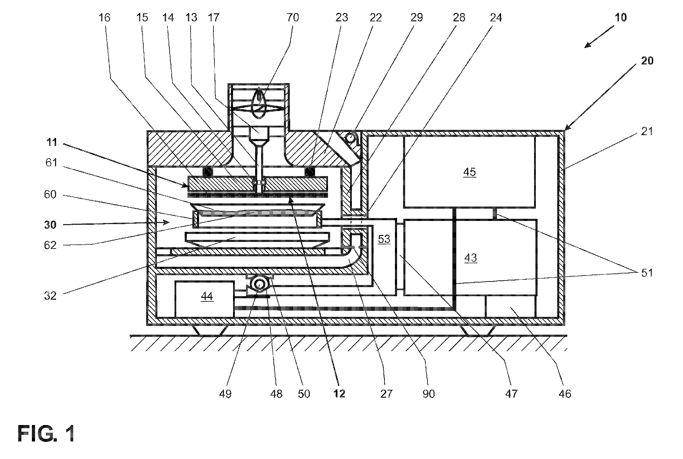

In der Figur 1 ist eine Messvorrichtung 10 im Schnitt dargestellt. Die Messvorrichtung 10 weist ein Gehäuse 20 auf, in welchem ein Prüfraum 30 angeordnet ist. Das Gehäuse 20 ist in einen bewegbaren Gehäuseteil 22 und in einen feststehenden Gehäuseteil 21 unterteilt. Im feststehenden Gehäuseteil 21 sind eine Wägezelle 43, ein Kalibriergewichtauflegemechanismus 44 und mindestens ein Elektronikmodul 45 angeordnet und durch Übertragungsmittel 51 miteinander verbunden. Das Elektronikmodul 45 enthält mindestens ein nicht näher dargestelltes Signalverarbeitungsmodul, gegebenenfalls auch ein Steuerungs- und/oder Regelungsmodul. Die Wägezelle 43 weist mindestens einen feststehenden Bereich 46 und einen Lastaufnahmebereich 47 auf. Bekannte Wägezellentypen sind beispielsweise mit Dehnungsmessstreifen bestückte elastische Verformungskörper, Wägezellen die nach dem Prinzip der elektromagnetischen Kraftkompensation arbeiten, Wägezellen mit Schwingsaiten, kapazitive Wägesensoren und dergleichen. Der feststehende Bereich 46 ist mit dem feststehenden Gehäuseteil 21 fest verbunden und am Lastaufnahmebereich 47 ist ein Verbindungsglied 53 angeordnet, welches eine Probeaufnahme 60 mit dem Lastaufnahmebereich 47 verbindet. Auf die Probeaufnahme 60 kann wie dargestellt, eine Probeschale 61 mit einer Probe 62 aufgelegt werden. Sofern es die Ausgestaltung der Probeaufnahme 60 erlaubt, kann selbstverständlich die Probe 62 auch direkt auf die Probeaufnahme 60 aufgebracht werden.

Ferner ist am Verbindungsglied 53 eine Kalibriergewichtauflage 48 ausgebildet. Auf diese Kalibriergewichtauflage 48 kann vom Benutzer oder durch die Steuerung der Messvorrichtung 10 ausgelöst, mittels des Kalibriergewichtauflegemechanismus 44 ein Kalibriergewicht 49 aufgelegt werden, um einen Korrekturwert für das Messsignal in Abhängigkeit des momentanen Betriebszustandes der Messvorrichtung 10 zu ermitteln. Nach der Ermittlung des Korrekturwertes wird das Kalibriergewicht 49 wieder von der Kalibriergewichtauflage 48 entkoppelt und durch den Kalibriergewichtauflegemechanismus 44 bis zum nächsten Kalibriervorgang gegen einen Anschlag 50 gepresst. Um Eckenlastfehler im Korrekturwert zu vermeiden, liegt idealerweise der Massenschwerpunkt des Kalibriergewichts 49 beziehungsweise der gemeinsame Massenschwerpunkt mehrerer Kalibriergewichte 49 nahe der Schwerpunktachse der Probeaufnahme 60 beziehungsweise der Probeschale 61, beziehungsweise der Probe 62. Unter Eckenlastfehler wird die Abweichung im Messwert einer Wägezelle bezeichnet, welche dieselbe Last bei deren exzentrischer Anordnung gegenüber deren zentrischen Anordnung auf der Probeaufnahme 60 verursacht.

Wie in Figur 1 gezeigt wird, ist das bewegbare Gehäuseteil 22 als Deckel ausgestaltet, in welchem ein Strahler 11 angeordnet ist. Dieses bewegliche Gehäuseteil 22 ist über ein Scharnier 29 im oberen Bereich des Gehäuses 20 mit dem feststehenden Gehäuseteil 21 verbunden, wobei die Schwenkachse des Scharniers 29 im Wesentlichen horizontal angeordnet ist. Das bewegbare Gehäuseteil 22 bildet den oberen Teil des Prüfraumes 30. Figur 1 zeigt das Messgerät 10 in Betriebsstellung, das heisst, dass der Deckel des Prüfraums 30 in geschlossener Position dargestellt ist.

Der Strahler 11 weist in der dargestellten Ausführung im Wesentlichen eine Scheibe 16 mit der Abstrahlungsfläche 12, eine Welle 13, eine Lagerstelle 14 und einen Verteilungskörper 15 auf. Der Verteilungskörper 15, in dessen Mitte die Lagerstelle 14 ausgebildet ist, ist über Stützen 23 mit dem beweglichen Gehäuseteil 22 verbunden. Im Verteilungskörper 15 können zur Strahlungserzeugung Heizstrahler, Heizfolien, Mikrowellengeneratoren, Halogen- und Quarzlampen angeordnet sein. Die Scheibe 16 besteht vorzugsweise aus einem Werkstoff, der eine gute Wärmeleitfähigkeit aufweist. Aufgrund der Wärmeleitfähigkeit und Dichte sowie der Bearbeitbarkeit und Korrosionsbeständigkeit ist insbesondere die Verwendung von Aluminium und Aluminiumlegierungen sehr vorteilhaft. Diese Teile werden vorteilhafterweise beschichtet, idealerweise schwarz eloxiert. Die Scheibe 16 kann aber auch aus keramischen Werkstoffen oder Glas gefertigt sein. In der Lagerstelle 14 ist die Welle 13 drehbar gelagert, deren Drehachse in Lastrichtung verläuft. Am in Lastrichtung weisenden Wellenende der Welle 13 ist die Scheibe 16 mit der Abstrahlungsfläche 12 angeordnet, deren flächige Ausdehnung im Wesentlichen der flächigen Ausdehnung der Probe 62 entspricht. Im Verteilungskörper 15 wird Strahlung, im Wesentlichen Wärmestrahlung erzeugt und an die Scheibe 16 übertragen, welche ihrerseits über die gegen die Probe gerichtete Abstrahlungsfläche 12 die Strahlung an die Probe 62 abgibt. Dabei wird die Scheibe 16 während des Trocknungsvorganges von einem Antrieb, welcher nachfolgend beschrieben wird, in Drehung versetzt. Aufgrund ihrer ebenen und planaren Ausbildung, ihrer zur Probe 62 parallelen Anordnung, ihrer Rotationsbewegung und ihrer auf die Beabstandung zur Probe 62 abgestimmten Oberflächenstruktur, vermag die Abstrahlungsfläche 12 durch ihre Emissionen in Lastrichtung die Probe 62 gleichmässig zu erwärmen.

Selbstverständlich kann auch der gesamte Strahler 11 drehbar ausgestaltet sein. Dadurch ist die Abstrahlungsfläche 12 direkt am Verteilungskörper 15 ausgebildet, wobei die Abstrahlungsfläche 12 wie vorangehend beschrieben, dieselben Ausprägungen und Eigenschaften aufweist. Die Energieversorgung des Strahlers 11 erfordert jedoch in dieser Ausführungsform einen grösseren Aufwand. Die Energieversorgung mit elektrischer Energie kann beispielsweise über einen Kollektor mit Kohlebürsten sichergestellt werden.

Oberhalb des Strahlers 11 ist eine Absaugvorrichtung 70 im beweglichen Gehäuseteil 22 integriert. Diese besteht aus einem Stator, einem im Stator integrierten Motor und einem Axialrotor. Die vorangehend beschriebene Welle 13 ist in diesem Ausführungsbeispiel mit einem Motor 17 verbunden. Selbstverständlich kann die Welle 13 direkt oder über ein Getriebe auch mit dem Antrieb der Absaugvorrichtung 70 verbunden sein, wodurch der separate Motor 17 dann entfällt. Sofern durch den Prüfraum 30 ein ausreichender Volumenstrom des gasförmigen Mediums mit ausreichender Geschwindigkeit entgegen der Lastrichtung strömt, kann die Scheibe 16 oder der drehbar gelagerte Strahler 11 auch mit einer Beschaufelung, ähnlich des Turbinenrades einer Axialturbine versehen sein. Der durch die Schaufeln ziehende Gasstrom versetzt dann die Scheibe 16 oder den gesamten Strahler 11 in Drehung.

Der untere Teil des Prüfraumes 30 ist im feststehenden Gehäuseteil 21 ausgebildet. Das mit der Wägezelle 43 mechanisch verbundene Verbindungsglied 53 ragt ebenfalls in den unteren Teil des Prüfraums 30 hinein, so dass die mit dem Verbindungsglied 53 verbundene Probeaufnahme 60 vollständig im Prüfraum 30 angeordnet ist. Zur thermischen Isolation ist eine Wand 28 des feststehenden Gehäuses 21 zwischen der Wägezelle 43 und dem Prüfraum 30 zumindest teilweise doppelwandig ausgestaltet. Durch die doppelwandige Ausgestaltung der Wand 28 wird ein Belüftungskanal 27 gebildet, durch den ein gasförmiges Medium in den Prüfraum 30 geleitet werden kann. Das während des Messvorganges durchströmende Medium kühlt dabei die Wand 28, so dass die vom Prüfraum 30 ausstrahlende Wärme nicht in den Gehäusebereich der Wägezelle 43 vordringen kann. Selbstverständlich muss das im Belüftungskanal 27 geführte gasförmige Medium nicht zwingend in den Prüfraum eingeleitet werden. Diesbezüglich ist auch ein einfacher Lüftungskanal verwendbar, wie er beispielsweise in der US 6,920,781 B2 offenbart wird.

Ferner kann unterhalb der Probeaufnahme im Prüfraum 30 ein zweiter Strahler 32 angeordnet sein. Da sich hier kein mit Feuchtigkeit gesättigtes Gaspolster bilden kann, muss die Abstrahlungsfläche dieses zweiten Strahlers 32 auch nicht zwingend in Drehung versetzt werden. Sofern dies aber aus Gründen der gleichmässigen Strahlungsverteilung zweckmässig erscheint, kann dies selbstverständlich vorgesehen werden.

Im Belüftungskanal 27 können ferner verschiedene Hilfseinrichtungen angeordnet werden. So kann mittels eines Ionisators 90 das gasförmige Medium ionisiert werden, um elektrostatische Ladungen innerhalb des Prüfraumes 30 zu eliminieren. Damit das Verbindungsglied in den Prüfraum hineinragen kann, weist die Wand 28 eine Durchführung 24 auf. Diese ist rohrförmig durchgehend geschlossen ausgestaltet, so dass kein durch den Belüftungskanal 27 strömendes Medium über die Durchführung 24 in den Proberaum 30 gelangen kann oder auf das Verbindungsglied 53 einwirkt.

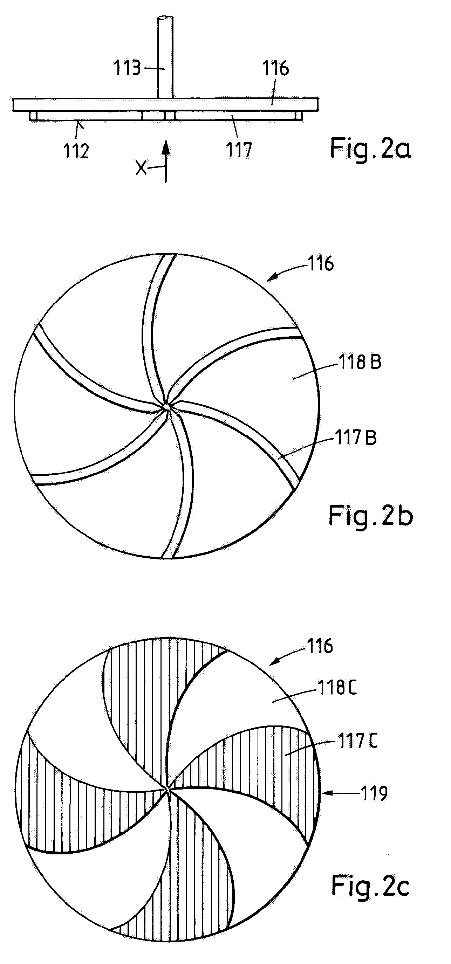

Die in der Figur 2a dargestellte Scheibe 116 im Schnitt entspricht derjenigen aus Figur 1, jedoch ist die Abstrahlungsfläche 112 zusätzlich mit Rippen 117 versehen. Der Formgebung dieser Rippen sind eigentlich keine Grenzen gesetzt. Um aber der Forderung einer möglichst guten Abführung des mit Feuchtigkeit angereicherten gasförmigen Mediums bei gleichzeitig möglichst gleichmässiger Strahlungsintensität gerecht zu werden, sind in den Figuren 2b und 2c zwei bevorzugte Ausgestaltungen in Aufsicht, Blickrichtung X dargestellt.

Die in Figur 2b dargestellte Scheibe 116 weist dünne, hervorstehende Rippen 117B mit rechteckigem Querschnitt auf. Diese Rippen 117B weisen eine Krümmung in radialer Richtung auf. Dementsprechend weisen die durch die Rippen 117B abgegrenzten, flächig ausgeformten Vertiefungen 118B ebenfalls eine Krümmung in radialer Richtung auf. Wie von Pumpen und Lüfterrädern bekannt, kann durch die Krümmung die radiale Strömungsgeschwindigkeit bedarfsgerecht gewählt werden.

Dadurch können Stauungen des gasförmigen Mediums zwischen den Rippen 117B verhindert werden, welche übermässige Turbulenzen zwischen der Probe und der Abstrahlungsfläche verursachen könnten. Solche Turbulenzen könnten das von der Wägezelle ermittelte Messergebnis empfindlich beeinflussen. Selbstverständlich kann an der Abstrahlungsfläche auch nur eine einzige Rippe ausgebildet sein, deren radiale Krümmung so gross ist, dass sie eine Spirale auf der Abstrahlungsfläche bildet.

Die in Figur 2c dargestellte Scheibe 116 weist ebenfalls hervorstehende Rippen 117C auf, welche zur besseren Illustration schraffiert dargestellt sind. Anders als in Figur 2b sind diese Rippen 117C aber gegen den Rand 119 der Scheibe 116 hin kontinuierlich breiter ausgestaltet, so dass die erhabenen Flächen der Rippen 117C den Flächen der zwischen den Rippen 117C ausgebildeten Vertiefungen 118C entspricht. Dadurch lässt sich gegenüber der in Figur 2b dargestellten Ausführung die Gleichmässigkeit der Strahlungsintensität nochmals verbessern. Die Rippen 117C und Vertiefungen 118C weisen ebenfalls, wie in Figur 2b ausführlich beschrieben, eine Krümmung in radialer Richtung auf.

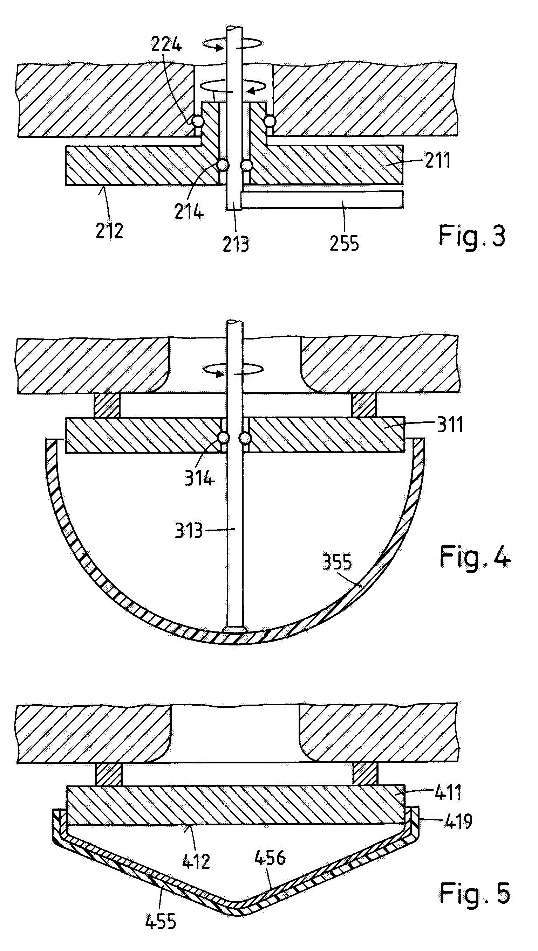

Ein weiteres Ausführungsbeispiel zeigt Figur 3 in schematischer Darstellung. Ein im Schnitt dargestellter, in einer gehäusefesten Lagerstelle 224 drehbar gelagerter Strahler 211 weist eine zentrale Bohrung mit einer Lagerstelle 214 auf, durch welche eine Welle 213 geführt und an deren Wellenende ein Wischerblatt als dynamischer Verdrängungskörper 255 angeordnet ist. Am Strahler 211 ist eine Abstrahlungsfläche 212 ausgebildet. Wie vorangehend in Figur 1 dargestellt, kann an Stelle des drehbar gelagerten Strahlers 211 auch ein Strahler mit einer drehbar ausgestalteten Abstrahlungsfläche eingesetzt werden. Im Betrieb weist die Strahler 211 gegenüber der Welle 213 einen entgegengesetzten Drehsinn auf, um eine hohe Förderleistung bei möglichst geringen Drehzahlen zu erreichen. Sowohl die Welle 213 als auch der Strahler 211 können je mit einem in Figur 3 nicht dargestellten Antrieb gekoppelt sein. Es sind aber auch Antriebsvarianten denkbar, bei denen der Strahler 211 über eine Getriebestufe mit der Welle 213 gekoppelt ist.

Figur 4 zeigt einen gehäusefest verbundenen Strahler 311 im Schnitt mit einer zentralen Bohrung 314, durch welche eine Welle 313 geführt ist. An dessen Wellenende ist als dynamischer Verdrängungskörper 355 eine Haube aus strahlendurchlässigem Material angeordnet. In diesem Ausführungsbeispiel weist der dynamische Verdrängungskörper 355 die Form einer Halbkugel auf. Es sind aber auch andere rotationssymmetrische Formen wie Kegel, abgestufte Kegel und dergleichen verwendbar. Am dynamischen Verdrängungskörper 355 können wie in den Figuren 2a bis 2c, Rippen, Rillen oder Vertiefungen an der vom Strahler 311 abgewandten Oberfläche angeordnet sein.

In der Figur 5 ist ein gehäusefest verbundener Strahler 411 im Schnitt dargestellt, über dessen Abstrahlungsfläche 412 eine kegelförmige, als statischer Verdrängungskörper 455 wirkende Haube aus strahlendurchlässigem Material angeordnet und mit dem Strahler 411 fest verbunden ist. Infolge der Wärmestrahlung steigt das mit Feuchtigkeit aus der Probe angereicherte gasförmige Medium gegen den statischen Verdrängungskörper 455 hin auf und wird durch dessen Form an den Rand 419 des Strahlers 411 geleitet beziehungsweise gegen den Rand 419 hin verdrängt. An der gegen den Strahler gerichteten Innenfläche weist der statische Verdrängungskörper 455 eine teilabsorbierende Schicht 456 auf. Diese Schicht 456 absorbiert einen Teil der vom Strahler 411 ausgehenden Emissionen und heizt dadurch den statischen Verdrängungskörper 455 auf. Dadurch kann vermieden werden, dass die aus der Probe austretende Feuchtigkeit an einem kühlen Verdrängungskörper 455 auskondensiert. Selbstverständlich kann wie in Figur 3 dargestellt ist, auch bei dieser Ausführung noch zusätzlich ein dynamischer Verdrängungskörper angeordnet werden, welcher der Form des statischen Verdrängungskörpers angepasst ist.

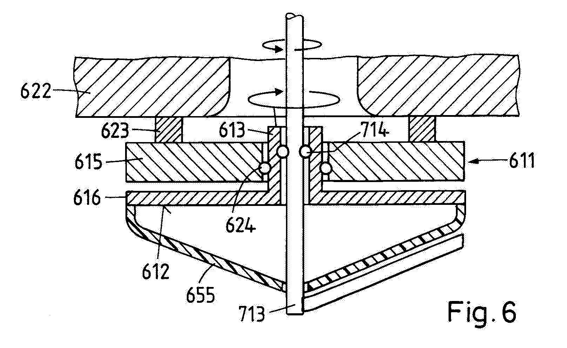

Eine mögliche Kombination der vorangehend beschriebenen Ausführungsbeispiele ist in Figur 6 dargestellt. Der Strahler 611 entspricht weitgehend demjenigen aus der Figur 1 und weist in der dargestellten Ausführung im Wesentlichen eine Scheibe 616 mit der Abstrahlungsfläche 612, eine Hohlwelle 613, eine zweite Lagerstelle 624 und einen Verteilungskörper 615 auf. Der Verteilungskörper 615, in dessen Mitte die zweite Lagerstelle 624 ausgebildet ist, ist über Stützen 623 mit dem Gehäuse 620 des Messgerätes verbunden. Ein erster dynamischer Verdrängungskörper 655 ist mit der drehbar gelagerten Scheibe 616 verbunden. Die Abstrahlungsfläche 612 und der erste dynamische Verdrängungskörper 655 weisen eine zentrale Bohrung auf, wobei in der Hohlwelle 613 eine Lagerstelle 714 angeordnet ist, in welcher eine Welle 713 gelagert ist. Sowohl die Hohlwelle 613 als auch die Welle 713 sind um eine Achse parallel zur Lastrichtung drehbar oder schwenkbar gelagert. Am zur Probe hin gerichteten Wellenende ist ein zweiter dynamischer Verdrängungskörper 755 mit diesem Wellenende verbunden. Die Abstrahlungsfläche 612 und der mit ihr verbundene erste dynamische Verdrängungskörper 655 weist gegenüber der Welle 713 mit dem zweiten dynamischen Verdrängungskörper 755 einen gegenläufigen Drehsinn auf.

Die vorgestellten Ausführungsformen zeigen Messgeräte zur gravimetrischen Feuchtigkeitsbestimmung mit unterschiedlichen Eigenschaften und Merkmalen. Die verschiedenen Eigenschaften und Merkmale wurden zur besseren Übersicht in verschiedenen Ausführungsbeispielen dargestellt, wobei es auch möglich ist, die aufgezeigten Merkmale und Eigenschaften miteinander zu kombinieren und in einem Messgerät zu realisieren. Ferner sind Lösungen, bei denen die Welle nicht durch eine Bohrung im Strahler geführt, sondern am Strahler vorbeigeführt ist ebenfalls Teil des Erfindungsgegenstandes. Die Erfindung ist auch nicht auf Ausführungen mit nur einer Welle beschränkt. Ebenso ist eine Rotationsbewegung für die Funktion der Erfindung nicht zwingend notwendig, auch oszillierende Bewegungen der Welle und/oder der Abstrahlungsfläche sind möglich und Gegenstand der Erfindung. Ferner ist der Erfindungsgegenstand auch nicht an die in Figur 1 gezeigte Konfiguration von Wägezelle und Gehäuse gebunden, sondern kann in allen bekannten Messgeräten mit oberhalb der Probe angeordneten Strahlern eingesetzt werden.

Bezugszeichenliste

| | |
|---|---|
| 10 | Messvorrichtung |
| 611, 411, 311, 211, 11 | Strahler |
| 612, 412, 212, 112, 12 | Abstrahlungsfläche |
| 713, 313, 213, 13 | Welle |
| 714, 214, 14 | Lagerstelle |
| 615, 15 | Verteilungskörper |
| 616, 116, 16 | Scheibe |
| 17 | Motor |
| 620, 20 | Gehäuse |
| 21 | feststehendes Gehäuseteil |
| 22 | bewegbares Gehäuseteil |
| 623,23 | Stütze |
| 24 | Durchführung |
| 27 | Belüftungskanal |
| 28 | Wand |
| 29 | Scharnier |
| 30 | Prüfraum |
| 32 | zweiter Strahler |
| 43 | Wägezelle |
| 44 | Kalibrierauflegemechanismus |
| 45 | Elektronikmodul |
| 46 | feststehender Bereich |
| 47 | Lastaufnahmebereich |
| 48 | Kalibriergewichtauflage |
| 49 | Kalibriergewicht |
| 50 | Anschlag |
| 51 | Übertragungsmittel |
| 53 | Verbindungsglied |
| 60 | Probeaufnahme |
| 61 | Probeschale |
| 62 | Probe |
| 70 | Absaugvorrichtung |
| 90 | Ionisator |
| 117C, 117B, 117 | Rippe |
| 118C, 118B | Vertiefung |
| 419, 119 | Rand |
| 224 | gehäusefeste Lagerstelle |
| 355, 255 | dynamischer Verdrängungskörper |
| 314 | zentrale Bohrung |
| 455 | statischer Verdrängungskörper |
| 456 | teilabsorbierende Schicht |
| 613 | Hohlwelle |
| 655 | erster dynamischer Verdrängungskörper |
| 624 | zweite Lagerstelle |
| 755 | zweiter dynamischer Verdrängungskörper |

## Patentansprüche

1. Messgerät (10) zur gravimetrischen Feuchtigkeitsbestimmung, welches mindestens einen Strahler (11, 211, 311, 411, 611), eine Wägezelle (43) und eine mit der Wägezelle (43) verbindbare Probeaufnahme (60) aufweist, auf welcher Probeaufnahme (60) eine Probe (62) auflegbar beziehungsweise entfernbar ist, wobei der mindestens eine Strahler (11, 211, 311) bezogen auf die Lastrichtung oberhalb der Probe (62) angeordnet ist und die Probe (62) überspannt, **dadurch gekennzeichnet, dass** der mindestens eine Strahler eine gegen die Probe (62) gerichtete, im Wesentlichen die gesamte Oberfläche der Probe (62) mit gleichmässiger Strahlungsintensität beaufschlagende Abstrahlungsfläche (12, 212, 312, 412) aufweist, und dass eine der Entfernung des im Betrieb zwischen der Probe (62) und der Abstrahlungsfläche (12, 212, 312, 412) mit Feuchtigkeit angereicherten gasförmigen Mediums dienende Entfernungsvorrichtung vorhanden ist.

2. Messgerät (10) nach Anspruch 1, **dadurch gekennzeichnet, dass** als Entfernungsvorrichtung dienend, zumindest die Abstrahlungsfläche (12) des mindestens einen Strahlers (11) relativ zur Probe (62) drehbar angeordnet ist.

3. Messgerät (10) nach Anspruch 1 oder 2, **dadurch gekennzeichnet, dass** die Abstrahlungsfläche (12) mindestens einen Oberflächenrauheitswert aufweist, der grösser oder gleich 0.0001 mm ist.

4. Messgerät (10) nach einem der Ansprüche 2 oder 3, **dadurch gekennzeichnet, dass** die Abstrahlungsfläche (112) mindestens eine Rippe (117B, 117C), Rille, Nut oder Vertiefung (118B, 118C) aufweist.

5. Messgerät (10) nach Anspruch 4, **dadurch gekennzeichnet, dass** die erhabenen Flächen der Rippen (117C) in ihrer Flächenform und ihrem Flächeninhalt den Flächen der Vertiefungen (118C) entsprechen.

6. Messgerät (10) nach Anspruch 1, **dadurch gekennzeichnet, dass** als Entfernungsvorrichtung dienend, mindestens ein statischer Verdrängungskörper (455) aus strahlendurchlässigem Material zwischen der Probe (62) und dem Strahler (411) angeordnet ist.

7. Messgerät (10) nach Anspruch 6, **dadurch gekennzeichnet, dass** der statische Verdrängungskörper (455) zumindest teilweise mit einem teilabsorbierenden Mittel (456) versehen ist.

8. Messgerät (10) nach Anspruch 6 oder 7, **dadurch gekennzeichnet, dass** der mindestens eine statische Verdrängungskörper (455) mit der Abstrahlungsfläche (411) oder mit einem Gehäuseteil (21, 22) des Messgerätes (10) verbunden ist.

9. Messgerät (10) nach einem der Ansprüche 6 bis 8, **dadurch gekennzeichnet, dass** der statische Verdrängungskörper (455) eine kegelförmige oder kugelförmige Haube, eine gekrümmte Platte oder eine ebene, bezogen auf die Lastrichtung unter einem Winkel α angeordneten Platte ist, wobei der Winkel zwischen 0°< α < 90° ist.

10. Messgerät (10) nach einem der Ansprüche 1 bis 9, **dadurch gekennzeichnet, dass** die Abstrahlungsfläche (212) und gegebenenfalls der statische Verdrängungskörper eine zentrale Lagerstelle (214) aufweisen und dass als Entfernungsvorrichtung dienend, durch diese Lagerstelle (214), um eine Achse parallel zur Lastrichtung drehbar oder schwenkbar gelagert, eine Welle (213) durchgeführt ist, wobei am zur Probe (62) hin gerichteten Wellenende mindestens ein dynamischer Verdrängungskörper (255, 355) mit diesem Wellenende verbunden ist.

11. Messgerät (10) nach Anspruch 10, **dadurch gekennzeichnet, dass** der dynamische Verdrängungskörper (255) ein Wischerblatt oder eine in Bezug auf die Achse der Welle radial und/oder axial gekrümmte Schaufel ist.

12. Messgerät (10) nach Anspruch 10 oder 11, **dadurch gekennzeichnet, dass** die Abstrahlungsfläche (212) gegenüber der Welle (213) mit dem mindestens einen dynamischen Verdrängungskörper (255) einen gegenläufigen Drehsinn aufweisen.

13. Messgerät (10) nach Anspruch 10, **dadurch gekennzeichnet, dass** der dynamische Verdrängungskörper (355) eine kegelförmige oder kugelförmige Haube aus strahlendurchlässigem Material ist.

14. Messgerät (10) nach Anspruch 12, **dadurch gekennzeichnet, dass** der dynamische Verdrängungskörper (355) zumindest teilweise mit einem teilabsorbierenden Mittel versehen ist und/oder mindestens eine Rippe, Rille, Nut oder Vertiefung aufweist.

15. Messgerät (10) nach Anspruch 1, **dadurch gekennzeichnet, dass** als Entfernungsvorrichtung dienend, zumindest die Abstrahlungsfläche (612) des mindestens einen Strahlers (611) relativ zur Probe (62) drehbar angeordnet ist, dass mindestens ein erster dynamischer Verdrängungskörper (655) mit der Abstrahlungsfläche (612) oder mit dem Strahler (611) verbunden ist, dass die Abstrahlungsfläche (612) und gegebenenfalls der erste dynamische Verdrängungskörper (655) eine Lagerstelle (714) aufweisen und dass durch diese Lagerstelle (714), um eine Achse parallel zur Lastrichtung drehbar oder schwenkbar gelagert, eine Welle (713) durchgeführt ist, wobei am zur Probe (62) hin gerichteten Wellenende mindestens ein zweiter dynamischer Verdrängungskörper (755) mit diesem Wellenende verbunden ist und die Abstrahlungsfläche (612) gegenüber der Welle (713) mit dem zweiten dynamischen Verdrängungskörper (755) einen gegenläufigen Drehsinn aufweisen.

16. Messgerät (10) nach einem der Ansprüche 1 bis 15, **dadurch gekennzeichnet, dass** in einer Ebene orthogonal zur Lastrichtung die Abstrahlungsfläche (12) im Wesentlichen dieselbe Projektionsfläche aufweist wie die Probe (62).

17. Messgerät (10) nach einem der Ansprüche 1 bis 16, **dadurch gekennzeichnet, dass** die Abstrahlungsfläche (12) im Wesentlichen eben und planar ausgebildet, sowie parallel zur Oberfläche der Probe (62) angeordnet, ist.

18. Messgerät (10) nach Anspruch 17, **dadurch gekennzeichnet, dass** der statische oder dynamische Verdrängungskörper (355, 455) die gesamte Abstrahlungsfläche (412) abdeckt.

19. Messgerät (10) nach einem der Ansprüche 6 bis 18, **dadurch gekennzeichnet, dass** der statische Verdrängungskörper (455) über lösbare Befestigungselemente mit der Strahlungsquelle (411) oder mit dem Gehäuse (20) verbunden ist.

20. Messgerät (10) nach einem der Ansprüche 10 bis 18, **dadurch gekennzeichnet, dass** der mindestens eine dynamische Verdrängungskörper (355) und/oder die Abstrahlungsfläche (12) über lösbare Befestigungselemente mit der Welle (13, 313) verbunden ist.
